(19) Europäisches Patentamt
European Patent Office
Office européen des brevets

(11)  EP 2 204 693 B1

(12)  **EUROPEAN PATENT SPECIFICATION**

(45) Date of publication and mention
of the grant of the patent:
**13.02.2013  Bulletin 2013/07**

(21) Application number: **08790803.4**

(22) Date of filing: **02.07.2008**

(51) Int Cl.:
*G02F 1/1368* (2006.01)    *G02F 1/133* (2006.01)
*G02F 1/1335* (2006.01)    *G09F 9/30* (2006.01)
*G09G 3/20* (2006.01)      *G09G 3/36* (2006.01)
*G02F 1/1362* (2006.01)

(86) International application number:
**PCT/JP2008/061983**

(87) International publication number:
**WO 2009/057350 (07.05.2009 Gazette 2009/19)**

(54) **DISPLAY**

ANZEIGE

DISPOSITIF D'AFFICHAGE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority:  **31.10.2007   JP 2007284540**

(43) Date of publication of application:
**07.07.2010   Bulletin 2010/27**

(73) Proprietor: **Sharp Kabushiki Kaisha
Osaka-shi, Osaka 545-8522 (JP)**

(72) Inventors:
• **KAISE, Yasuyoshi
Osaka-shi, Osaka 545-8522 (JP)**
• **MORIYA, Yoshimizu
Osaka-shi, Osaka 545-8522 (JP)**

(74) Representative: **Müller - Hoffmann & Partner
Patentanwälte
Innere Wiener Strasse 17
81667 München (DE)**

(56) References cited:
**EP-A2- 0 772 183      EP-A2- 1 178 462
JP-A- 2003 270 661     JP-A- 2003 315 766**

**Description**

Technical Field

The present invention relates to a feed-through effect of a display device.

Background Art

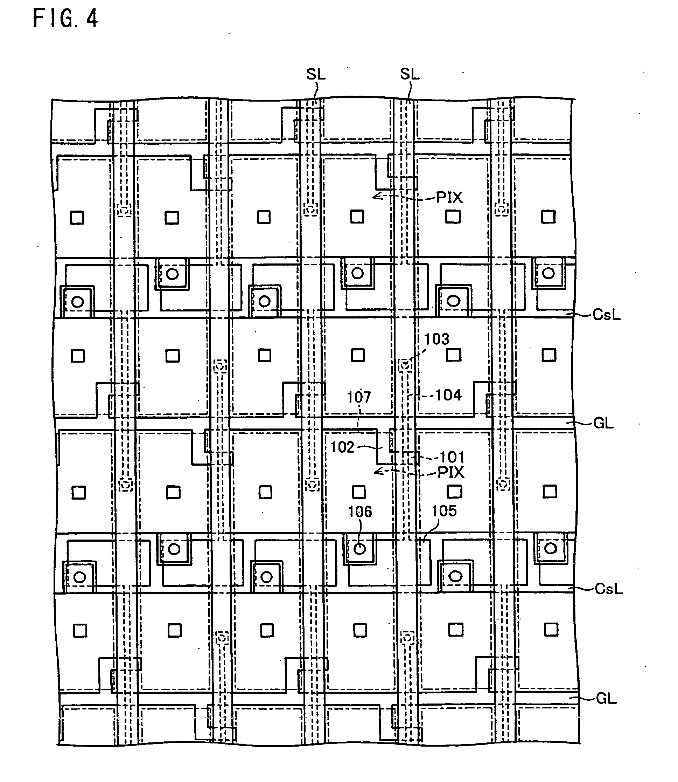

In an active matrix liquid crystal display device, gate bus lines are connected to gate electrodes of TFTs which serve as selection elements for pixels, respectively. Fig. 4 illustrates an example of a state in which gate bus lines are connected to gates of TFTs in a conventional liquid crystal display device. In Fig. 4, a pixel PIX is an area surrounded by adjacent two gate bus lines GL and adjacent two source bus lines SL. Each gate bus line GL has connection wirings 102 respectively extending to gates 101 of TFTs in such a manner that connection wirings 102 for pixels PIX on odd columns and connection wirings 102 for pixels PIX on even columns extend in opposite directions alternatively.

Below each source bus line SL, each gate 101 crosses a semiconductor layer 104 connected to the source bus line SL via a contact hole 103. The semiconductor layer 104 is connected to a pixel electrode 107 via an auxiliary capacitance electrode pad 105 and a contact hole 106. The pixel electrode 107 is a transparent electrode. The auxiliary capacitance electrode pad 105 and an auxiliary capacitance bus line CSL below the auxiliary capacitance electrode pad 105 form auxiliary capacitance therebetween.

The connection wirings 102 extend in opposite directions alternatively for each column. This enables data signals to be opposite in polarity between pixels adjacent in a row direction while performing a gate bus line inversion driving. Therefore, this liquid crystal display device can perform so-called pseudo dot inversion driving disclosed in Patent Literature 1.

Citation List

Patent Literature 1
Japanese Patent Publication (Patent No. 2982877 (Registered on September 24, 1999: Japanese Patent Application Publication, Tokukaihei, No. 4-223428 (Publication Date: August 13, 1992))

EP 1 178 462 A2 relates to an active matrix electroluminescent display device. The display device is characterized in that each of a plurality of pixels comprises a first TFT for switching, a second TFT for switching, a TFT for erasing, a TFT for EL driving, and an EL element, driving of the TFT for EL driving is controlled by the first TFT for switching, the second TFT for switching, and the TFT for erasing, and light emission by the EL element is controlled by the TFT for EL driving.

EP 0 772 183 A2 relates to a matrix-type display capable of being repaired by pixel unit and a repair method therefor. Two or more of signal lines such as scanning lines, image signal lines and auxiliary signal lines and a pixel electrode are overlapped via an insulating layer, so that a defect such as the disconnection of the image signal lines and scanning lines, the short of the pixel electrode and the signal line, and the loss of electrode of a switching element, and a pixel defect can be repaired. Here, the layout of the auxiliary gate line and dual gate line can be modified.

Summary of Invention

However, in the conventional active matrix liquid crystal display device, each connection wiring 102 extending from the gate bus line GL to the gate 101 of the TFT is underpassed below the pixel electrode 107 of a pixel with which the connection wiring 102 is associated, as illustrated in Fig. 4. Consequently, the connection wiring 102 is arranged oppositely to the pixel electrode 107, thereby allowing to generate a large capacitance. This capacitance causes the so-called "feed-through effect" which, when a data signal is written to a pixel PIX and a TFT is turned off, shifts a pixel electrode potential from a potential attained at the time of completion of charging. Where a feed-through voltage $\Delta Vd$ is the amount of the shift of the pixel electrode potential from the potential attained at the time of completion of charging, and $\Delta Vg$ is a voltage amplitude of a gate signal, a relation represented by an equation below is met.

$$\Delta Vd = \Delta Vg \times \alpha$$

$$\alpha = Cgd1/(Clc+Ccs+Cgd1+Cgd2+Csd1+Csd2+Cetc)$$

...... (Equation 1)

where:

Clc: liquid crystal capacitance
Ccs: auxiliary capacitance
Cgd1: parasitic capacitance between a gate bus line selecting and driving a pixel and a pixel electrode
Cgd2: parasitic capacitance between a gate bus line not selecting and driving the pixel and the pixel electrode
Csd1: parasitic capacitance between a source bus line supplying a drain potential to the pixel and the pixel electrode
Csd2: parasitic capacitance between a source bus line not supplying a drain potential to the pixel and the pixel electrode
Cetc: other capacitance the pixel has.

The capacitance between the connection wiring 102 and the pixel electrode 107 is a part of the parasitic capacitance Cgd1, and increases the parasitic capacitance Cgd1. As is understood from Equation 1, the increase in the parasitic capacitance Cgd1 causes the increase in the feed-through voltage ΔVd, resulting in: (1) expansion of a range of a voltage required for operating a TFT; and (2) deterioration of in-plane flicker characteristics, which is caused because rewriting on pixel electrodes with potential shifted at the time of gate-off is carried out with different potential levels, depending on positions of the pixel electrodes along a gate bus line GL, such as how far from an input side and an end side of the gate bus line GL the pixel electrodes are. These adversely affect performance of a liquid crystal display device.

The present invention was made in view of the foregoing conventional problems, and an object of the present invention is to achieve a display device which is hardly likely to produce the feed-through effect.

In order to attain the object, a display device of the present invention is an active matrix display device including three-terminal elements as selection elements of pixels, wherein: each three-terminal element has a conduction control terminal being formed from a wiring extended from a scanning signal line to that one of the pixels for which the three-terminal element performs its selecting operation, the wiring being extended to that one of the pixels through an area of another one of the pixels and being arranged oppositely to a pixel electrode of the another one of the pixels in a panel thickness direction.

According to the invention, the conduction control terminal of the three-terminal element is formed from the wiring extended from the scanning signal line to that one of the pixels through the area of the another one of the pixels. Capacitance is hardly formed between the wiring and a pixel electrode of that one of the pixels, because it is possible to make the wiring hardly go through an area of that one of the pixels. Consequently, the parasitic capacitance between the scanning signal line selecting that one of the pixels and the pixel electrode is very small. This enables a feed-through voltage to become very small.

With this arrangement, it becomes possible to achieve a display device which is hardly likely to produce a feed-through effect.

In order to attain the object, the display device of the present invention is arranged such that the scanning signal line for selecting the another one of the pixels is other than the scanning signal line used for selecting that one of the pixels.

According to the invention, the capacitance between the scanning signal line not selecting that one of the pixels and the pixel electrode becomes large, because the wiring is extended so as to be arranged oppositely to the pixel electrode of the another one of the pixels in the panel thickness direction, and the scanning signal line for selecting the another one of the pixels is other than the scanning signal line used for selecting that one of the pixels. With this arrangement, it is possible to further reduce a feed-through voltage and to further restrain a feed-through effect.

In order to attain the object, the display device of the present invention is arranged such that the conduction control terminal is formed in an area crossing a data signal line of the wiring.

According to the invention, the conduction control terminal of the three-terminal element is formed in the area crossing the data signal line of the wiring. With this arrangement, it is possible to keep to a minimum the approach of the wiring to an area of a pixel and to restrain a feed-through effect that much.

In order to attain the object, the display device of the present invention is arranged such that the three-terminal element has a conduction path at least a part of which is provided in an area to be arranged oppositely to the data signal line in the panel thickness direction.

According to the invention, the three-terminal element has the conduction path at least a part of which is provided in the area to be arranged oppositely to the data signal line in the panel thickness direction. With this arrangement, it is possible to prevent the conduction path of the three-terminal element from decreasing an aperture ratio in that one of the pixels.

In order to attain the object, the display device of the present invention is arranged such that the conduction path of the three-terminal element is connected to a pixel electrode of that one of the pixels via the area to be arranged oppositely to the data signal line in the panel thickness direction and an area to be arranged oppositely to a light-shielding area provided in that one of the pixels in the panel thickness direction.

According to the invention, the conduction path of the three-terminal element is connected to the pixel electrode of that one of the pixels via the area to be arranged oppositely to the data signal line in the panel thickness direction and the area to be arranged oppositely to the light-shielding area provided in that one of the pixels in the panel thickness direction. With this arrangement, it is possible to reliably prevent the conduction path of the three-terminal element from decreasing an aperture ratio in that one of the pixels.

In order to attain the object, the display device of the present invention includes an auxiliary capacitance bus line in the light-shielding area.

According to the invention, the light-shielding area includes the auxiliary capacitance bus line. This allows the conduction path to be positioned using an existing light-shielding area.

In order to attain the object, the display device of the present invention is a liquid crystal display device having a transparent area for a transparent display and a reflective area for a reflective display, the reflective area being formed above the light-shielding area in the panel thickness direction.

According to the invention, the conduction path is connected to the pixel electrode in the reflective area of that one of the pixels through the area to be arranged oppositely to, in the panel thickness direction, the light-shielding area that is an area for an auxiliary capacitance line provided in that one of the pixels. With this arrangement, it is possible to reliably prevent the conduction path of the three-terminal element from decreasing an aperture ratio in that one of the pixels.

In order to attain the object, the display device of the present invention is arranged such that the pixels on odd columns and on even columns are allotted alternatively with different one of two scanning signal lines adjacent thereto in a column direction as the scanning signal lines from which the wiring is extended to the pixels.

According to the invention, the pixels on odd columns and on even columns are allotted alternatively with different one of two scanning signal lines adjacent thereto in a column direction as the scanning signal lines from which the wiring is extended to the pixels. This arrangement allows the display device to perform a pseudo dot inversion driving.

In order to attain the object, the display device of the present invention is arranged such that the display device performs a pseudo dot inversion driving in which pixels adjacent to each other in a row direction are driven with data signals of different polarities while performing a gate bus line inversion driving.

With this invention, the display device performing a pseudo dot inversion driving hardly causes the feed-through effect.

For a fuller understanding of the nature and advantages of the invention, reference should be made to the ensuing detailed description taken in conjunction with the accompanying drawings.

Brief Description of Drawings

Fig. 1

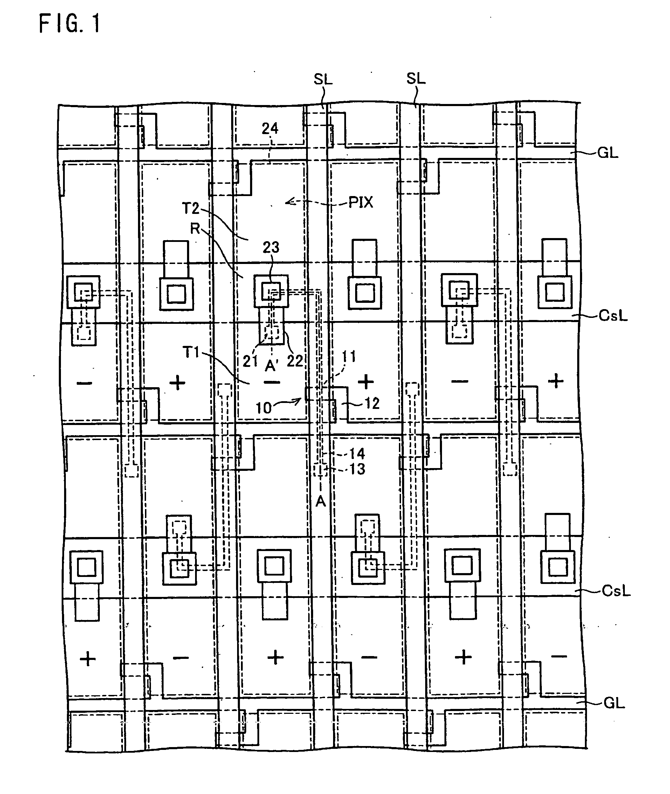

Fig. 1 illustrates one embodiment of the present invention, and is a plain view illustrating a structure of a display section equipped with a liquid crystal display device.
Fig. 2

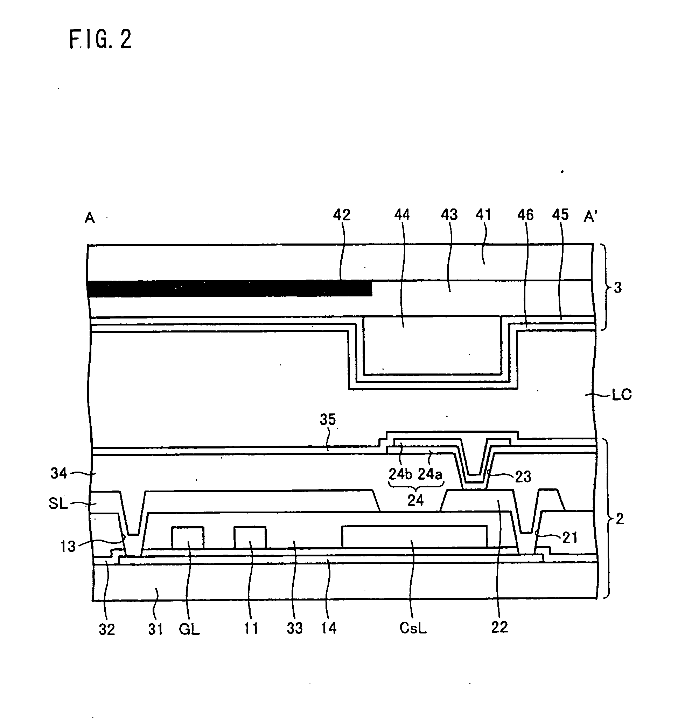

Fig. 2 is a sectional view taken along A-A' line of Fig. 1.
Fig. 3

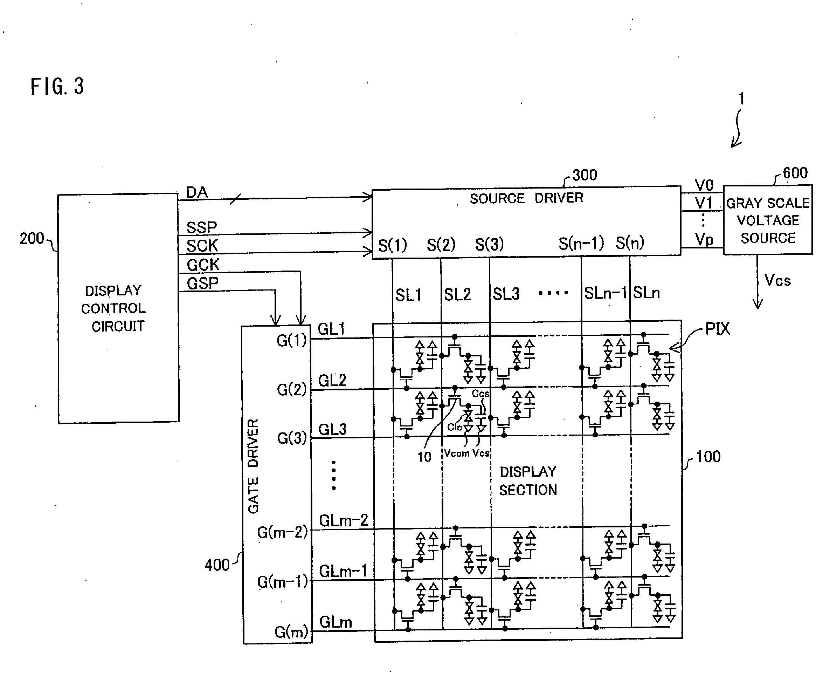

Fig. 3 illustrates the embodiment of the present invention, and is a block diagram illustrating a structure of a liquid crystal display device.
Fig. 4
Fig. 4 is a flat view illustrating a structure of a display section equipped with a liquid crystal display device of a conventional art.

Reference Signs List

| | |
|---|---|
| 1 | Liquid crystal display device (Display device) |
| 10 | TFT (Selection element, Three-terminal element) |
| 24 | Pixel electrode |
| 11 | Gate (Conduction control terminal) |
| 12 | Connection wiring (Wiring) |
| GL | Gate bus line (Scanning signal line) |
| SL | Source bus line (Data signal line) |
| CsL | Auxiliary capacitance bus line |
| PIX | Pixel |

Description of Embodiments

One embodiment of the present invention is explained as below, based on Fig. 1 through Fig. 3.

Fig. 3 illustrates a structure of a liquid crystal display device (display device) 1 related to the present embodiment. The liquid crystal display device 1 includes a source driver 300 as a data signal line drive circuit, a gate driver 400 as a scanning signal line drive circuit, an active matrix display section 100, a display control circuit 200 for controlling the source driver 300 and the gate driver 400, and a gray scale voltage source 600.

The display section 100 includes gate bus lines GL1-GLm as a plurality of scanning signal lines (m), source bus lines SL1-SLn as a plurality of data signal lines (n) crossing the gate bus lines GL1-GLm respectively, and a plurality of pixels PIX (m × n) corresponding to each intersection where the gate bus lines GL1-GLm intersect with the source bus lines SL1-Sln. These pixels PIX are positioned in a matrix form to make a pixel array. Furthermore, an auxiliary capacitance bus line CsL is provided between the adjacent gate bus lines GL, as illustrated in an after-mentioned Fig. 1.

Each pixel PIX is provided with a TFT (a selection element, a three-terminal element) 10, a liquid crystal capacitance Clc and an auxiliary capacitance Ccs. A gate (a conduction control terminal) of the TFT 10 is connected to a gate bus line GL, a source thereof is connected to a source bus line SL, and a drain thereof is connected to a pixel electrode. The liquid crystal capacitance Clc is formed by interleaving a liquid crystal layer between a pixel electrode and a counter electrode. A counter voltage Vcom is applied on the counter electrode. The auxiliary capacitance Ccs is formed between a pixel electrode and the auxiliary capacitance bus line CsL. An auxiliary capacitance voltage Vcs is applied on the auxiliary capacitance bus line CsL.

Moreover, the pixels PIX on odd columns and on even columns are alternatively given different one of two gate bus lines GL adjacent thereto in the column direction as a gate bus line GL connected to the gate of the TFT 10 thereof. This enables the liquid crystal display device 1 to perform a pseudo dot inversion driving. Marks "+" and "-" in Fig. 1 represent polarities of data signals.

The display control circuit 200 supplies a source start pulse signal SSP, a source clock signal SCK and a display data DA to the source driver 300, and also supplies a gate start pulse signal GSP and a gate clock signal GCK to the gate driver 400.

The source driver 300 generates data signals S(1)-S(n) sequentially in every horizontal scanning period based on the display data DA, the source start pulse signal SSP and the source clock signal SCK, and outputs these data signals S(1)-S(n) on the source bus lines SL1-SLn respectively. The gray scale voltage source 600 generates voltage V0-Vp as a gray scale reference voltage for selecting as the data signals S(1)-S(n), and supplies the voltage thus generated to the source driver 300. Further, the gray scale voltage source 600 also generates and outputs an auxiliary capacitance voltage Vcs.

The gate driver 400 generates a gate signal for writing each data signal S(1)-S(n) to (a pixel capacitance of) each pixel PIX and selects the gate bus lines GL1-GLm sequentially in approximately every horizontal scanning period for each frame period based on the gate start pulse signal GSP and the gate clock signal GCK.

Next, a detail structure of the display section 100 is explained using Fig. 1.

Fig. 1 illustrates a plain view of the display section 100. The display section 100 is a transreflective display section, and each pixel PIX has transmissive areas T1 and T2 and a reflective area R. The reflective area R is above the auxiliary capacitance bus line CsL between adjacent gate bus lines GL, and the transmissive areas T1 and T2 are respective areas between respective ones of the adjacent gate bus lines GL and the auxiliary capacitance bus line CsL.

A gate 11 of the TFT 10 is positioned below the source bus line SL and above the semiconductor layer 14, that is, the gate 11 of the TFT 10 is positioned in an area to be arranged oppositely to the source bus line SL in the panel thickness direction. The gate 11 is formed by intersecting the source bus line SL with a connection wiring 12 extended from the gate bus line GL. The connection wiring 12 is extended from the gate bus line GL to the gate 11 of the TFT 10 by underpassing a pixel electrode 24 of a pixel which is, in a row direction, adjacent to the pixel to which the TFT 10 belongs. That is, the connection wiring 12 is extended via an area to be arranged oppositely to the pixel electrode 24 in the panel thickness direction. The semiconductor layer 14 is connected to the source bus line SL through a contact hole 13. The semiconductor layer 14 is extended such that after intersecting with the gate bus line GL and the gate 11 sequentially, the semiconductor layer 14 overpasses the auxiliary capacitance line CsL to a center portion of the pixel PIX. Furthermore, through a contact hole 21 on the center portion, the semiconductor layer 14 is connected to a drain electrode 22 located above there. Through a contact hole 23, the drain electrode 22 is connected to a pixel electrode 24 located above there.

By configuring such that at least a part of a conduction path connecting the source and the drain of each TFT 10 is provided in the area to be arranged oppositely to the source bus line SL in the panel thickness direction as described above, it is possible to prevent the conduction path from decreasing an aperture ratio in the pixels. The decrease in the aperture ratio in the pixels by the conduction paths can be avoided drastically particularly because each conduction path is connected respectively to its corresponding pixel electrode 24 of a pixel through an area to be arranged oppositely to the source bus line SL in the panel thickness direction and an area to be arranged oppositely to a light-shielding area which is an area of the auxiliary capacitance line CsL provided in a pixel in the panel thickness direction.

As above, in this embodiment, from the gate bus line GL to the gate 11 of the TFT 10 in a pixel to which the connection wiring 12 is connected, the connection wiring 12 is extended in such a manner that the connection wiring 12 is routed through an area to be arranged oppositely to, in the panel thickness direction, the pixel electrode 24 of a pixel other than this pixel, for example, a pixel adjacent to this pixel in the row direction. Further, the gate 11 is formed on an end of the connection wiring 12, by using the connection wiring 12. There is hardly any capacitance formed between the connection wiring 12 and the pixel electrode 24 of the pixel to which the connection wiring 12 is connected. This is because it is possible to make the connection wiring 12 hardly go through the area of the pixel as illustrated in Fig. 1. Therefore, the parasitic capacitance Cgd1 between the gate bus line GL selecting and driving the pixel and the pixel electrode 24 of the pixel is very small. Moreover, a parasitic capacitance Cgd2 between a gate bus line GL not selecting and driving this pixel and the pixel electrode 24 of this pixel becomes large because the connection wiring 12 of a pixel adjacent to this pixel in the column direction forms capacitance between the pixel electrode 24 of this pixel. As a result, $\alpha$ of the Equation 1, therefore, a feed-through voltage $\Delta Vd$ becomes very small. As above, a display device which is hardly likely to produce a feed-through effect can be realized.

Fig. 2 illustrates a sectional view taken along A-A' line of Fig. 1.

The display section 100 has such a schematic sectional structure that a liquid crystal layer LC is positioned between a TFT substrate 2 and a counter substrate 3.

The TFT substrate 2 is made by forming a semiconductor layer 14 made from Si, a gate insulating film 32, a gate bus line GL - a gate 11 of a TFT 10 an auxiliary capacitance line CsL, an interlayer insulating film 33, a source bus line SL a drain electrode 22, an interlayer insulating film 34, a transparent electrode 24a, a reflective electrode 24b and a liquid crystal alignment film 35 sequentially on the first substrate 31 that is a transparent substrate such as a glass substrate. Contact holes 13 and 21 are formed through the gate insulating film 32 and the interlayer insulating film 33. A contact hole 23 is formed through the interlayer insulating film 34. The pixel electrode 24 consists of the transparent electrode 24a and the reflective electrode 24b. While the transparent electrode 24a is provided on the whole area of the pixel electrode 24, the reflective electrode 24b is provided only on a reflection area R. The auxiliary capacitance bus line CsL forms the auxiliary capacitance Ccs between the pixel electrode 24.

The counter substrate 3 is made by forming a black matrix 42, a color resist 43, a reflection area cell gap adjustment film 44, a counter electrode 45 and a liquid crystal alignment film 46 sequentially on the second substrate 41 being a transparent substrate such as a glass substrate. The reflection area cell gap adjustment film 44 is provided on a reflection area R, and has such a thickness that makes a liquid crystal layer LC thinner than the transparent areas T1 and T2 by about 50%.

Note that the description above describes one embodiment herein.

Meanwhile, a three-terminal element as a selection element of a pixel PIX may be replaced with any elements that have a conduction control terminal such as a bipolar transistor, other than a field-effect transistor such as a TFT.

Furthermore, though the display device performing a pseudo dot inversion driving is described in the above, the invention is applicable to any driving systems, not to be limited to the above. Here, the connection wiring 12 is not necessarily arranged oppositely to the pixel electrode 24 of a pixel PIX other than the pixel to which the connection wiring 12 is connected. However, being arranged oppositely to the connection wiring 12 with the pixel electrode 24 of a pixel PIX other than the pixel to which the connection wiring 12 is connected causes a large parasitic capacitance Cgd2 of each pixel PIX, thereby making a feed-through voltage $\Delta Vd$ very small and a feed-through effect restrain even more.

Besides, though the transreflective liquid crystal display device is described in the above, the present invention is not limited this, and the present invention is not limited to a particular display type classified in terms of how to use light, such as transparent type, reflective type, etc. Further, the present invention is not limited in terms of structures of the TFT substrate 2, the counter substrate 3, and the liquid crystal layer LC as illustrated in Fig.2.

The invention being thus described, it will be obvious that the same way may be varied in many ways. Such variations are not to be regarded as a departure from the scope of the invention, and all such modifications are intended to be included as long as they fall within the scope of the following claims.

As above, a display device of the present invention is an active matrix display device including three-terminal elements as selection elements of pixels, wherein: each three-terminal element has a conduction control terminal being formed from a wiring extended from a scanning signal line to that one of the pixels for which the three-terminal element performs its selecting operation, the wiring being extended to that one of the pixels through an area of another one of the pixels.

With this arrangement, it becomes possible to produce a display device which is hardly likely to produce a feed-through effect.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations provided such variations do not exceed the scope of the patent claims set forth below.

Industrial Applicability

The invention is suitably applicable to a liquid crystal display device.

**Claims**

1. An active matrix display device (1) including three-terminal elements (10) as selection elements of pixels (PIX), wherein:

   each three-terminal element (10) has a conduction control terminal (11) being formed from a wiring (12) extended from a scanning signal line (GL) to that one of the pixels (PIX) for which the three-terminal element (10) performs its selecting operation, the wiring (12) being extended to that one of the pixels (PIX) through an area of another one of the pixels (PIX); and **characterized in that** the wiring (12) is extended to be arranged oppositely to a pixel electrode (24) of the another one of the pixels (PIX) in a panel thickness direction and not to go through the area of that one of the pixels, such that capacitance is hardly formed between the wiring and c pixel electrode of that one of the pixels,

2. The display device as set forth in claim 1, wherein: the scanning signal line (GL) for selecting the another one of the pixels (PIX) is other than the scanning signal line (GL) used for selecting that one of the pixels (PIX).

3. The display device (1) as set forth in claim 1 or claim 2, wherein: the conduction control terminal (11) is formed in an area where the wiring (12) crosses a data signal line (SL).

4. The display device (1) as set forth in claim 3, wherein: the three-terminal element (10) has a conduction path at least a part of which is provided in an area to be arranged oppositely to the data signal line (SL) in the panel thickness direction.

5. The display device (1) as set forth in claim 4, wherein: the conduction path of the three-terminal element (10) is connected to a pixel electrode (24) of that one of the pixels (PIX) via the area to be arranged oppositely to the data signal line (SL) in the panel thickness direction and an area to be arranged oppositely to a light-shielding area provided in that one of the pixels (PIX) in the panel thickness direction.

6. The display device (1) as set forth in claim 5, comprising: an auxiliary capacitance bus line (CSL) in the light-shielding area.

7. The display device (1) as set forth in claim 5 or claim 6, being a liquid crystal display device having a transparent area for a transparent display and a reflective area for a reflective display, the reflective area being formed above the light-shielding area in the panel thickness direction.

8. The display device (1) as set forth in any one of claims 1 to 7, wherein: the pixels (PIX) on odd columns and on even columns are allotted alternatively with different one of two scanning signal lines (GL) adjacent thereto in a column direction as the scanning signal lines (GL) from which the wiring is extended to the pixels (PIX).

**9.** The display device (1) as set forth in claim 8, comprising driving means for performing a pseudo dot inversion driving in which pixels adjacent to each other in a row direction are driven with data signals of different polarities while performing a gate bus line inversion driving.

**Patentansprüche**

**1.** Aktivmatrix-Anzeigevorrichtung (1) mit Elementen mit drei Anschlüssen (10) als Auswahlelemente von Pixeln (PIX), wobei:

jedes Element mit drei Anschlüssen (10) einen Leitungssteueranschluss (11) besitzt, der aus einer Verdrahtung (12) gebildet ist, die von einer Abtastsignalleitung (GL) zu dem einen der Pixel (PIX), für das das Element mit drei Anschlüssen (10) seine Auswahlfunktion ausführt, verläuft, wobei die Verdrahtung (12) zu demjenigen der Pixel (PIX) durch einen Bereich eines weiteren der Pixel (PIX) verläuft; und **dadurch gekennzeichnet, dass** die Verdrahtung (12) so verläuft, um gegenüber einer Pixelelektrode (24) des weiteren der Pixel (PIX) in einer Richtung der Dicke der Tafel angeordnet zu sein und nicht durch den Bereich des einen der Pixel zu gehen, so dass kaum eine Kapazität zwischen der Verdrahtung und einer Pixelelektrode des einen der Pixel gebildet wird.

**2.** Anzeigevorrichtung nach Anspruch 1, wobei: die Abtastsignalleitung (GL) zum Auswählen des weiteren der Pixel (PIX) von der Abtastsignalleitung (GL) zum Auswählen des einen der Pixel (PIX) verschieden ist.

**3.** Anzeigevorrichtung (1) nach Anspruch 1 oder 2, wobei: der Leitungssteueranschluss (11) in einem Bereich gebildet ist, in dem die Verdrahtung (12) eine Datensignalleitung (SL) kreuzt.

**4.** Anzeigevorrichtung (1) nach Anspruch 3, wobei: das Element mit drei Anschlüssen (10) einen Leitungsweg besitzt, wovon sich mindestens ein Teil in einem Bereich befindet, um gegenüber der Datensignalleitung (SL) in Richtung der Dicke der Tafel angeordnet zu sein.

**5.** Anzeigevorrichtung (1) nach Anspruch 4, wobei: der Leitungsweg des Elements mit drei Anschlüssen (10) mit einer Pixelelektrode (24) des einen der Pixel (PIX) über den Bereich, der gegenüber der Datensignalleitung (SL) in Richtung der Dicke der Tafel anzuordnen ist, und einen Bereich, der gegenüber eines lichtabschirmenden Bereichs, der sich in dem einen der Pixel (PIX) in Richtung der Dicke der Tafel befindet, verbunden ist.

**6.** Anzeigevorrichtung (1) nach Anspruch 5, die enthält: eine Hilfskapazitätsbusleitung (CSL) in dem lichtabschirmenden Bereich.

**7.** Anzeigevorrichtung (1) nach Anspruch 5 oder Anspruch 6, die eine Flüssigkristallanzeigevorrichtung ist, die einen transparenten Bereich für eine transparente Anzeige und einen reflektierenden Bereich für eine reflektierende Anzeige besitzt, wobei der reflektierende Bereich über dem lichtabschirmenden Bereich in Richtung der Dicke der Tafel gebildet ist.

**8.** Anzeigevorrichtung (1) nach einem der Ansprüche 1 bis 7, wobei: die Pixel (PIX) in ungeraden Spalten und in geraden Spalten abwechselnd einer verschiedenen der zwei daran in einer Spaltenrichtung angrenzenden Abtastsignalleitungen (GL) als die Abtastsignalleitungen (GL), von denen die Verdrahtung zu den Pixeln (PIX) verläuft, zugewiesen sind.

**9.** Anzeigevorrichtung (1) nach Anspruch 8, die Ansteuerungsmittel zum Ausführen einer Pseudopunkt-Inversionsansteuerung, in der in einer Zeilenrichtung aneinander angrenzende Pixel mit Datensignalen von verschiedenen Polaritäten angesteuert werden, während ein Gatebusleitungs-Inversionsantrieb ausgeführt wird.

**Revendications**

**1.** Ecran à matrice active (11) comprenant des éléments à trois bornes (10) en tant qu'éléments de sélection de pixels (PIX), dans lequel :

chaque élément à trois bornes (10) comprend une borne de commande de conduction (11) formée d'un câblage (12) s'étendant d'une ligne de signal de balayage (GL) jusqu'à celui des pixels (PIX) pour lequel l'élément à trois bornes (10) effectue son opération de sélection, le câblage (12) étant étendu jusqu'à celui des pixels (PIX) traversant une zone d'un autre des pixels (PIX) ; et **caractérisé en ce que** le câblage (12) est étendu de manière à être disposé à l'opposé d'une électrode de pixel (24) dudit autre des pixels (PIX) dans une direction d'épaisseur de panneau et à ne pas traverser la zone de ce pixel parmi les pixels, de sorte que la capacité est à peine formée entre le câblage et une électrode de pixel de ce pixel parmi les pixels.

2. Ecran conformément à la revendication 1, dans lequel : la ligne de signal de balayage (GL) pour sélectionner ledit autre des pixels (PIX) est une ligne de signal de balayage autre que la ligne de signal de balayage (GL) utilisée pour sélectionner ce pixel parmi les pixels (PIX).

3. Ecran (1) conformément à la revendication 1 ou à la revendication 2, dans lequel : la borne de commande de conduction (11) est formée dans une zone dans laquelle le câblage (12) croise une ligne de signal de données (SL).

4. Dispositif d'affichage (1) conformément à la revendication 3, dans lequel : l'élément à trois bornes (10) comprend un trajet de conduction dont au moins une partie est située dans une zone devant être placée à l'opposé de la ligne de signal de données (SL) dans la direction d'épaisseur de panneau.

5. Ecran (1) conformément à la revendication 4, dans lequel : le trajet de conduction de l'élément à trois bornes (10) est connecté à une électrode de pixel (24) de ce pixel parmi les pixels (PIX) par l'intermédiaire de la zone devant être placée à l'opposé de la ligne de signal de données (SL) dans la direction d'épaisseur de panneau et une zone devant être placée à l'opposé d'une zone de blocage de lumière située dans ce pixel parmi les pixels (PIX) dans la direction d'épaisseur de panneau.

6. Dispositif d'affichage (1) conformément à la revendication 5 comprenant : une ligne de bus de capacité auxiliaire (CSL) dans la zone de blocage de lumière.

7. Ecran (1) conformément à la revendication 5 ou à la revendication 6, ledit écran étant un écran à cristaux liquides comprenant une zone transparente pour un affichage transparent et une zone réfléchissante pour un affichage réfléchissant, la zone réfléchissante étant formée au-dessus de la zone de blocage de lumière dans la direction d'épaisseur de panneau.

8. Dispositif d'affichage (1) conformément à l'une quelconque des revendications 1 à 7, dans lequel : les pixels (PIX) sur des colonnes impaires et sur des colonnes paires se voient attribuer de manière alternative une ligne de signal de balayage différente parmi deux lignes de signal de balayage (GL) qui leurs sont adjacentes dans une direction de colonne en tant que lignes de signal de balayage (GL) à partir desquelles le câblage s'étend jusqu'aux pixels (PIX).

9. Ecran (1) conformément à la revendication 8 comprenant des moyens de commande pour effectuer une commande d'inversion de pseudo points dans laquelle des pixels mutuellement adjacents dans une direction de rangée sont commandés à l'aide de signaux de données de polarités différentes tout en effectuant une commande d'inversion de ligne de bus d'une grille.

# FIG. 1

# FIG. 2

FIG. 3

EP 2 204 693 B1

EP 2 204 693 B1

FIG. 4

**EP 2 204 693 B1**

**REFERENCES CITED IN THE DESCRIPTION**

**Patent documents cited in the description**

- JP 2982877 B
- JP 4223428 A
- EP 1178462 A2
- EP 0772183 A2